# EUROPÄISCHE PATENTANMELDUNG

(11) **EP 1 035 174 A2**
(43) Veröffentlichungstag der Anmeldung: **13.09.2000**
(21) Anmeldenummer: 99109325.3
(22) Anmeldetag: 28.05.1999
(51) Int. Cl.: C09D 5/16, C09D 5/14

(54) **Unterwasseranstrichmittel für Schiffe**

(30) Priorität: 12.03.1999 DE 19911134
(71) Anmelder: Becker, Josef, 83734 Hausham (DE)
(72) Erfinder: Becker, Josef, 83734 Hausham (DE)
(74) Vertreter: Dr. Elisabeth Jung Dr. Jürgen Schirdewahn Dipl.-Ing. Claus Gernhardt

(57) **Zusammenfassung**

Das erfindungsgemäße Unterwasseranstrichmittel für Schiffe besteht aus einer Mischung von Lösungen A und B, wobei es sich bei der Lösung A um eine Kombination aus einem Siliconöl, einem Alkohol und einem Fichtennadel-/Kiefernnadelöl und/oder Terpentinöl handelt, während die Lösung B Kolophonium in einem Fichtennadel-/Kiefernnadelöl und/oder Terpentinöl enthält.

## Beschreibung

Der unter dem Wasserspiegel liegende Schiffs- oder Bootsrumpf muß vor allem in Hafenanlagen vor dem Verschmutzen geschützt werden.

Bisher hat man hierfür Silicon-Schutzfilme aufgebracht, was aber sehr aufwendig ist, da solche Anstrichmassen nur auf gründlich vorgereinigten Flächen haften. Außerdem haben es die Schiffseigentümer als Nachteil empfunden, daß auf solche Filme anschließend kein Farbanstrich aufgebracht werden kann, weil das Silicon praktisch keine Farbe mehr annimmt.

Im Hinblick auf den Schutz der Umwelt wäre es daher sehr erwünscht, ein gut haftendes und umweltfreundliches Anstrichmittel zur Verfügung zu haben, das sich einfach aufbringen läßt und stark schmutzabweisend ist.

Dieses technische Problem wird durch das Unterwasseranstrichmittel gemäß der Erfindung gelöst.

Es handelt sich dabei um eine Mischung aus 25 bis 30 Volumprozent einer Lösung A und 75 bis 70 Volumprozent einer Lösung B, wobei die Lösung A
a) zu 26 bis 39 Volumprozent aus einem Siliconöl,
b) zu 26 bis 49 Volumprozent aus mindestens einem niedrigmolekularen Alkohol und
c) zu 26 bis 49 Volumprozent aus einem Fichtennadel- oder Kiefernnadelöl und/oder einem Terpentinöl
besteht, während die Lösung B zu gleichen Gewichsteilen aus
d) Kolophonium und
e) einem Fichtennadel- oder Kiefernnadelöl und/oder einem Terpentinöl besteht.

Diese neuartige Kombination von Bestandteilen gewährleistet eine ausgezeichnete Haftung am Schiffsrumpf und eine hohe Schmutzabweisung, außerdem verbessert die Siliconölkomponente die Gleitfähigkeit des Schiffes.

Die Mischung aus den beiden Lösungen A und B läßt sich auf den Schiffsrumpf aufsprühen oder mit dem Pinsel auftragen.

Es ist zweckmäßig, der Mischung auch noch einen kleinen Anteil eines Antiverlaufsmittels zuzusetzen, insbesondere wenn das Anstrichmittel durch Aufsprühen aufgebracht wird.

Die Mischung wird in mehreren Schritten wie folgt hergestellt:
Für die Lösung A stellt man
a) eine Lösung aus dem Siliconöl und dem niedrigmolekularen Alkohol her.
Zu dieser klaren Lösung setzt man
b) ein Fichtennadel- oder Kiefernnadelöl und/oder ein Terpentinöl hinzu.
Für die Herstellung der Lösung B löst man
c) das Kolophonium in einem Fichtennadel- oder Kiefernnadelöl und/oder einem Terpentinöl auf.
In einem letzten Schritt
d) vermischt man die beiden Lösungen A und B im gewünschten Volumverhältnis.

Gemäß einer bevorzugten Ausführungsform sind die Komponenten a), b) und c) in der Lösung A in gleichen Volumanteilen vorhanden.

Das Volumverhältnis der Lösungen A und B in der fertigen Mischung beträgt zweckmäßig 30:70.

Als Siliconöl kann jedes handelsübliche Produkt verwendet werden, zweckmäßig handelt es sich dabei um ein linearpolymeres Dimethylsiloxan. Solche Öle haben im allgemeinen Molekulargewichte im Bereich von 1000 bis 150 000.

Als niedrigmolekularer Alkohol eignet sich beispielsweise Ethanol, n-Propanol und insbesondere Isopropanol. Es können auch Alkoholgemische eingesetzt werden.

Bei den erfindungsgemäß verwendeten Fichtennadel- und Kiefernnadelölen handelt es sich um Naturprodukte, die aus den verschiedenen Pinaceen-Arten gewonnen werden. Von besonders hoher Qualität ist sibirisches Fichtennadelöl.

Als Terpentinöle kommen Produkte in Betracht, die aus dem Balsam lebender Kiefernbäume oder aus dem Holz bzw. den Wurzeln solcher Bäume gewonnen werden.
Auch sogenanntes Sulfatterpentinöl kann verwendet werden.

Als Kolophonium kommen alle im Handel erhältlichen Typen in Betracht, nämlich Balsamharz, Wurzelharz und sogenanntes Tallharz.

### Ausführungsbeispiel

Man stellt eine Lösung A aus gleichen Volumenanteilen von
a) Polydimethylsiloxan-Öl
b) Isopropanol und
c) sibirischem Fichtennadelöl
her, indem man 333,3 ml der Komponente a) in 333,3 ml der Komponente b) auflöst und dann 333,3 ml der Komponente c) zusetzt. Außerdem stellt man eine Lösung 13 aus Kolophonium und einem Holzterpentinöl her, welche gleiche Gewichtsanteile an Kolophonium und Öl enthält.

Anschließend vermischt man 900 ml der Lösung A mit 2100 ml der Lösung B, was einem Volumenverhältnis von 30:70 entspricht.

Diese Mischung wird nach Zusatz eines Antiverlaufsmittels auf den mit einem Dampfstrahler gereinigten und gut getrockneten Unterwasserschiffsrumpf eines Segelbootes aufgesprüht. Die Sprühbehandlung wird dreimal wiederholt, wobei man den Anstrichfilm nach jedem Auftragen gut trocknen läßt.

## Patentansprüche

1. Unterwasseranstrichmittel für Schiffe, dadurch gekennzeichnet, daß es eine Mischung aus
25 bis 30 Volumprozent einer Lösung A und
75 bis 70 Volumprozent einer Lösung B ist, wobei die Lösung A
a) zu 26 bis 39 Volumprozent aus einem Silikonöl,
b) zu 26 bis 49 Volumprozent aus mindestens einem niedrigmolekularen Alkohol und zu
c) 26 bis 49 Volumprozent aus einem Fichtennadel- oder Kiefernnadelöl und/oder aus einem Terpentinöl besteht
und die Lösung B zu gleichen Gewichtsteilen aus
d) Kolophonium und
e) einem Fichtennadel- oder Kiefernnadelöl und/oder einem Terpentinöl besteht.

2. Unterwasseranstrichmittel nach Anspruch 1, dadurch gekennzeichnet, daß die Lösung A zu gleichen Teilen aus den Komponenten
a) Siliconöl, b) niedrigmolekularer Alkohol und c) Fichtennadelöl oder Kiefernnadelöl und/oder Terpentinöl besteht.

3. Unterwasseranstrichmittel nach Anspruch 1 und 2, dadurch gekennzeichnet, daß das Siliconöl ein linearpolymeres Dimethylsiloxan umfaßt.

4. Unterwasseranstrichmittel nach Anspruch 1 bis 3, dadurch gekennzeichnet, daß der niedrigmolekulare Alkohol Ethanol, n-Propanol und/oder Isopropylalkohol ist.

5. Unterwasseranstrichmittel nach Anspruch 1 bis 4, dadurch gekennzeichnet, daß es aus 30 Volumprozent der Lösung A und 70 Volumprozent der Lösung B besteht und daß die Lösung A 33,3 Volumprozent Polydimethylsiloxan-Öl,
33,3 Volumprozent Isopropanol und
33,3 Volumprozent Terpentinöl enthält.

6. Unterwasseranstrichmittel nach Anspruch 1 bis 5, dadurch gekennzeichnet, daß die Mischung ein Antiverlaufsmittel enthält.

7. Verfahren zur Herstellung eines Unterwasseranstrichmittels nach Anspruch 1 bis 6, dadurch gekennzeichnet, daß man für die Lösung A
a) eine Lösung aus dem Siliconöl und dem niedrigmolekularen Alkohol herstellt und
b) zu dieser klaren Lösung ein Fichtennadel- oder
Kiefernnadelöl und/oder ein Terpentinöl hinzusetzt;
daß man für die Lösung B
c) das Kolophonium in einem Fichtennnadel- oder Kiefernnadelöl und/oder einem Terpentinöl auflöst und schließlich
d) die beiden Lösungen A und B miteinander vermischt.
